# EUROPEAN PATENT SPECIFICATION

(11) **EP 2 424 024 B1**
(45) Date of publication and mention of the grant of the patent: **23.10.2013**
(21) Application number: 11759030.7
(22) Date of filing: 24.03.2011
(51) Int. Cl.: H01M 8/06, H01M 8/04, C02F 1/28, C02F 9/00, C02F 1/42, C02F 1/00

(54) **FUEL CELL SYSTEM**
BRENNSTOFFZELLENSYSTEM
SYSTÈME DE PILE À COMBUSTIBLE

(30) Priority: 25.03.2010 JP 2010069647
(43) Date of publication of application: 29.02.2012
(73) Proprietor: Panasonic Corporation, Kadoma-shi Osaka 571-8501 (JP)
(72) Inventor: OE, Jun, 2-1-61, Shiromi, Chuo-ku, Osaka-shi, Osaka 540-6207 (JP); KAN, Hiroaki, 2-1-61, Shiromi, Chuo-ku, Osaka-shi, Osaka 540-6207 (JP); YAMAMOTO, Masao, 2-1-61, Shiromi, Chuo-ku, Osaka-shi Osaka 540-6207 (JP)
(74) Representative: Grünecker, Kinkeldey, Stockmair & Schwanhäusser
(86) International application number: PCT/JP2011/001744
(87) International publication number: WO 2011/118221

(56) References cited:
- WO-A1-2006/088053
- JP-A- 10 314 727
- JP-A- 2010 033 917
- US-A1- 2002 117 436
- US-A1- 2007 160 881
- US-A1- 2007 248 853

## Description

### Technical Field

The present invention relates to fuel cell systems capable of suppressing microorganisms from growing proliferously in water passages within the systems, and operating without a maintenance work for a long period of time.

### Background Art

In general, during power generation in a fuel cell system, it is necessary to supply water containing less impurities, for use in a reforming reaction in a hydrogen supply means for generating hydrogen-rich reformed gas from a fuel such as a city gas, or for cooling a fuel cell. During power generation in the fuel cell system, water is generated through a reaction in the fuel cell, while water is generated by combustion in the hydrogen supply means. The water is recovered by a condensed water tank as condensed water. The condensed water is stored in a water tank after the condensed water is caused to pass through a water purifier typically composed of active carbon and ion-exchange resin. After that, this water is used for the reforming reaction in the fuel cell system or for cooling the fuel cell during power generation as stated above.

Thus, the fuel cell system is provided with water passages through which the condensed water is recovered, stored and circulated. The condensed water flowing through these passages does not fundamentally contain chlorine. But, the condensed water passes through components and pipes when it is condensed, and as a result, contains a small amount of ionic impurities or impurities such as organic constituents (TOC: total organic carbon). Among these impurities, the ionic impurities are gathered by the ion-exchange resin, but non-ionic impurities pass through the ion-exchange resin. Among the non-ionic impurities, organic matters collectively referred to as TOC, or the like, can be adsorbed onto active carbon.

Examples of a known technique for adsorbing TOC using the active carbon are as follows.

For example, Patent Literature 1 discloses in Fig. 3, a technique in which active carbon (24) is contained in a water tank (10), and ions exchangers (13, 14) are provided between the water tank and a hydrogen generator (2), and between the water tank and a cooling water circulating passage (25). However, in the configuration disclosed in Patent Literature 1, organic matters contained in the water can be adsorbed onto the active carbon, but generation of bacteria in the active carbon, cannot be suppressed.

For example, Patent Literature 2 discloses a technique in which a pump is actuated during a shut-down period of a fuel cell system, to cause water to migrate in a water supply passage including a water purifier 7 including active carbon (7a) and ion-exchange resin (7b). However, in this configuration, bacteria generated inside the active carbon can be discharged to outside, but generation of the bacteria inside the active carbon cannot be suppressed.

Thus, the active carbon effectively adsorbs TOC, but TOC is a nutrient source of microorganisms. Therefore, the active carbon is an environment in which the microorganisms easily grow proliferously. However, the techniques disclosed in Patent Literatures 1 and 2 are incapable of suppressing the microorganisms from growing proliferously in the active carbon. Therefore, if the active carbon is used, the microorganisms are generated more easily in the active carbon than in another portion. As a result, the active carbon or a passage provided with the active carbon might get clogged with the proliferously grown microorganisms and a problem might arise in the operation of the fuel cell system.

To address such a situation, a technique has been proposed, in which ion-exchange resin in a water purifying means is filled with an antibacterial agent (e.g., see Patent Literature 3).

Fig. 9 shows the water purifying means in the conventional fuel cell system disclosed in Patent Literature 3. As shown in Fig. 9, in the case of this conventional fuel cell system, a purified water generator (deionizer) 240 for generating purified water from condensed water includes an ion-exchange resin 243a and an antibacterial unit 243b including active carbon to which powder having an antibacterial ability adheres, which are formed as a mixed bed or a double bed (see Figs. 2 and 4 in Patent Literature 3). It is disclosed that in such a configuration, even in the purified water generator in which a liquid flows slowly and microorganisms may easily grow proliferously, the microorganisms can be suppressed from growing proliferously by the antibacterial action of an antibacterial agent. In addition, during a shut-down state of the system, even when water gets stagnant inside the purified water generator 240, silver ions are eluted from the antibacterial agent formed as the mixed bed inside the tank, to be precise, silver powder adhering onto the active carbon. Therefore, microorganisms can be suppressed from growing proliferously.

However, the eluted silver ions, in particular, the silver ions eluted at a most downstream side of the purified water generator 240, are not captured by the ion-exchange resin inside the purified water generator 240, but might flow outwardly of the purified water generator 240. If the silver ions which have flown outwardly of the purified water generator 240 reach an interior of a reformer which is a hydrogen generating means, precipitated silver is deposited there and impedes water supply to the reformer. This reduces a water supply amount, which may cause a problem associated with the operation of the reformer. In a case where the water which has passed through the purified water generator 240 is used as cooling water in a fuel cell, the eluted silver ions may increase an electric conductivity of the cooling water, and hence makes it impossible to provide an insulative property in a desired region of the fuel cell. Therefore, the antibacterial agent which generates the antibacterial ions and the active carbon which adsorbs the TOC are preferably positioned upstream of the ion-exchange resin, to inhibit the antibacterial ions from flowing outwardly to a region downstream of the ion-exchange resin.

A known technique in which the antibacterial agent which generates the antibacterial ions is disposed upstream of the ion-exchange resin is as follows. Patent Literature 4 discloses a technique in which an antibacterial ion generating section for generating antibacterial ions (to be specific, silver ions or copper ions) is provided in a condensed water tank, and the active carbon and the ion-exchange resin are disposed downstream of the antibacterial ion generating section.

Fig. 10 shows a conventional fuel cell system disclosed in Patent Literature 4. As shown in Fig. 10, an antibacterial ion generating section 303 formed of, for example, net-like silver or copper, is installed inside a condensed water tank 302. In addition, a water purifier 304 composed of ion-exchange resin (first water purifying material 342f) and active carbon (second water purifying material 342s) is disposed. A first pump 352 guides water from inside the condensed water tank to the water purifier. It is disclosed that in such a configuration, since antibacterial ions are eluted from the antibacterial ion generating section into the condensed water, microorganisms are suppressed from growing proliferously inside the condensed water tank and the water purifier.

Patent Literature 5 discloses in Fig. 2, a fuel cell system including a storage section (42) filled with ion-exchange resin (43a) and antibacterial agent (43b) disposed above the ion-exchange resin (43a) in a gravity direction, including active carbon as a base material and having a predetermined thickness. Patent Literature 5 discloses a technique, in which during a shut-down state of the fuel cell system, the antibacterial agent is immersed in recovered water staying in the storage section all the time.

US 2007/160881 A1 relates to a fuel cell System and having the features of the preamble of claim 1.

### Citation Lists

### Patent Literature

Patent Literature 1: Japanese Laid-Open Patent Application Publication No. 2001-338668
Patent Literature 2: International Publication No. 2006/088053
Patent Literature 3: Japanese Laid-Open Patent Application Publication No. 2005-243251
Patent Literature 4: Japanese Laid-Open Patent Application Publication No. 2009-199808
Patent Literature 5: Japanese Laid-Open Patent Application Publication No. 2010-33917

### Summary of the Invention

### Technical Problem

However, in the conventional configuration (see Fig. 10) disclosed in Patent Literature 4, the condensed water containing the antibacterial ions is supplied to the water purifier 304 by using a first pump 352. In the water purifier 304, the condensed water passes through the active carbon 342s in a previous stage and then reaches the ion-exchange resin 342f in a subsequent stage. Therefore, during an unactuated state of the first pump, the antibacterial ions cannot be supplied sufficiently to the water purifier 304. In particular, during the operation stop state of the system, in which water does not flow through the system but stays still, the antibacterial ions cannot be supplied sufficiently to the water purifier 304, and are adsorbed onto the ion-exchange resin 342f. Therefore, there is a possibility that bacteria grows proliferously in the active carbon 342s inside the water purifier 304. If bacteria grows proliferously, the active carbon 342s may get clogged with the bacteria.

In the conventional configuration disclosed in Patent Literature 5, the antibacterial agent (43b) is disposed above the ion-exchange resin (43a) in a gravity direction, and a space is provided in the upper portion of the storage section (42). This space communicates with a fifth condenser (34) or a third condenser (35) for condensing steam contained in combustion gas or combustion exhaust gas via a pipe (63) for guiding recovered water. The fifth condenser (34) or the third condenser (35) communicates with outside to discharge the combustion gas or the combustion exhaust gas to outside. In addition to such a path, the space communicates with outside to discharge gas such as carbon dioxide gas generated within the ion-exchange resin (43a), via a discharge outlet (45a4).

Since the space in the upper portion of the storage section (42) communicates with outside, a large quantity of air containing oxygen is supplied from outside during the shut-down state of the fuel cell system. During the shut-down state of the fuel cell system, the antibacterial agent containing active carbon is immersed in recovered water staying in the storage section all the time. As a result, during the shut-down state of the fuel cell system, the active carbon constituting the base material of the antibacterial agent is all the time exposed to the space supplied with oxygen sufficiently. Therefore, there is a possibility that bacteria grows proliferously in the active carbon beyond the antibacterial ability of the antibacterial agent.

Furthermore, in Patent Literature 5, the layer of the antibacterial agent (43b) including the active carbon as the base material is provided in contact with the upper surface of the ion-exchange resin (43a). From this, it is presumed that the antibacterial ions are absorbed quickly into the ion-exchange resin in a portion of the layer of the antibacterial agent, which is located in the vicinity of the upper surface of the ion-exchange resin. Therefore, it is presumed that the antibacterial ions cannot adequately perform antibacterial action for the active carbon in that portion.

The present invention is directed to solving the above described problem, and an object of the present invention is to provide a fuel cell system capable of surely preventing microorganisms from growing proliferously in an active carbon layer inside a water purifier with a simple configuration even during a shut-down state of the fuel cell system, in particular, during a long-time operation stop state of the fuel cell system.

### Solution to Problem

A fuel cell system of the present invention comprises the features of claim 1.

In such a configuration, the water can stay in the first gap between the active carbon layer and the ion-exchange resin layer. The water in the first gap contains the antibacterial ions which have passed through the antibacterial agent layer and the active carbon layer. Because of this, in a case where the flow of the water is stopped during an operation stop state (in particular, during a long-time operation stop state), at least a part of antibacterial ions contained in the water present in the first gap is supplied to the active carbon layer again. Therefore, generation of bacteria in the active carbon layer can be lessened more surely. In addition, the antibacterial ions remaining in the water in the first gap can suppress the bacterial from being generated in this water. Furthermore, the antibacterial ions eluted from the antibacterial agent layer can diffuse sufficiently to the entire active carbon layer (in particular, surface of the active carbon layer which is closer to the ion-exchange resin layer).

In accordance with the above configuration, the active carbon layer is disposed between the antibacterial agent layer and the ion-exchange resin layer such that the antibacterial agent layer is positioned upstream of the active carbon layer in a flow direction. Because of this, during the operation of the fuel cell system, the antibacterial ions can be supplied suitably to the upstream portion of the active carbon layer, where the bacteria is generated more easily. Also, the antibacterial ions eluted from the antibacterial agent layer can be prevented from being adsorbed onto the ion-exchange resin layer, which would make it impossible for the antibacterial action to occur in the active carbon layer. Thus, the antibacterial ions can be effectively utilized.

In the present invention, separate members formed by a layer of the active carbon and a layer of the antibacterial agent, respectively, are used. This case is more preferable to achieve reduction of a manufacturing cost and easiness of handling, as compared to a case where a member including a mixture of the active carbon and the antibacterial agent is used.

In the present invention, the water supplied from the condensed water tank to the fuel cell unit through the water supply passage may be used as cooling water for cooling the fuel cell or reforming water for use in a reforming reaction for generating hydrogen from a raw material and water.

A first spacer having water permeability may be disposed in the first gap. The first spacer is preferably a plate-shaped member incapable of ion exchange. For example, the first spacer may be a resin member having a plurality of through-holes, a porous resin member, a woven fabric, or an unwoven fabric.

The water purifier may have a second gap between the antibacterial agent layer and the active carbon layer.

In such a configuration, since the water can stay in the second gap between the antibacterial agent layer and the active carbon layer, the antibacterial ions eluted from the antibacterial agent layer can diffuse more. Therefore, it is expected that a proper antibacterial action occurs in the water staying in the second gap, the active carbon layer, etc..

A second spacer having water permeability may be disposed in the second gap. The second spacer is preferably a plate-shaped member incapable of ion exchange. For example, the second spacer may be a resin member having a plurality of through-holes, a porous resin member, a woven fabric, or an unwoven fabric.

Alternatively, the first spacer may be disposed in the first gap and the second spacer may be disposed in the second gap. In this case, when viewed in the thickness direction (flow direction of water) of the active carbon layer, the first spacer and/or the second spacer may be disposed so as to cover the end surface of the peripheral portion of the active carbon layer, and these spacers may be connected together. This allows the water containing the antibacterial ions to be supplied to the end surface of the peripheral portion of the active carbon layer. As a result, the bacterial can be more surely suppressed from being generated in the active carbon layer.

In such a configuration, since the antibacterial agent layer and the active carbon layer are immersed in the water, the antibacterial ions are allowed to diffuse to both surfaces (upper and lower surfaces) of the active carbon layer, during the operation stop state of the fuel cell system. Since the active carbon layer and air do not directly contact each other, supply amount of oxygen to the active carbon layer can be reduced, and generation of the bacteria can be suppressed more surely.

The water purifier may be coupled to the water supply passage such that the water purifier is supplied with the water from an underside portion in the gravity direction through the water supply passage; and the antibacterial agent layer and the active carbon layer may be disposed below the ion-exchange resin layer in the gravity direction.

In such a configuration, since the antibacterial agent layer and the active carbon layer can be immersed in the water more surely, with a simple configuration, it is expected that the antibacterial ions can be suitably supplied to the active carbon layer, and the amount of oxygen supplied to the active carbon layer can be reduced.

The condensed water tank may be coupled to the water supply passage to discharge the water from an underside portion in the gravity direction through the water supply passage.

The antibacterial agent layer may include an antibacterial agent including a carried or kneaded antibacterial material, and a container having a plurality of through-holes and storing the antibacterial agent.

The antibacterial agent layer may be an antibacterial support element including a carried or kneaded antibacterial material.

### Advantageous Effects of the Invention

In accordance with the fuel cell system of the present invention, even during the operation stop state, the microorganisms such as the bacteria can be suppressed from being generated and growing proliferously in the active carbon. Even in a case where the antibacterial agent is eluted and stay in the water purifier, it is possible to suppress or prevent the antibacterial agent from flowing outwardly from the water purifier when the operation of the fuel cell system is resumed. As a result, adverse effect of the antibacterial agent on the hydrogen supply means or the fuel cell at a downstream side can be reduced or prevented.

### Brief Description of the Drawings

[Fig. 1] Fig. 1 is a view of a configuration of a fuel cell system according to Embodiment 1 of the present invention.
[Fig. 2] Fig. 2 is an enlarged cross-sectional view of the lower portion of a water purifier in the fuel cell system of Fig. 1.
[Fig. 3] Fig. 3 is an enlarged cross-sectional view showing configurations of the lower portions of water purifying means according to Modified examples 1 ∼ 4.
[Fig. 4] Fig. 4 is a schematic view showing a configuration of a condensed water tank and a water purifier 14 in a fuel cell system according to Modified example 5.
[Fig. 5] Fig. 5 is an enlarged cross-sectional view of the lower portion of a water purifier incorporated into a fuel cell system according to Embodiment 2 of the present invention.
[Fig. 6] Fig. 6 is an enlarged cross-sectional view of the lower portion of a water purifier incorporated into a fuel cell system according to Embodiment 3 of the present invention.
[Fig. 7] Fig. 7 is an enlarged cross-sectional view of the lower portion of a water purifier incorporated into a fuel cell system according to Embodiment 4 of the present invention.
[Fig. 8] Fig. 8 is a view of a configuration of a fuel cell system according to Embodiment 5 of the present invention.

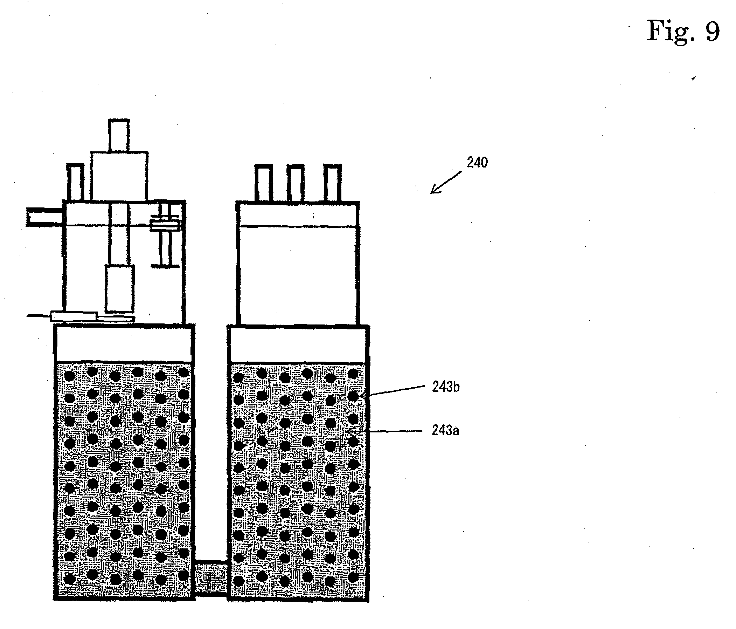

[Fig. 9] Fig. 9 is a cross-sectional view showing a water purifier and a water tank in a conventional fuel cell system.

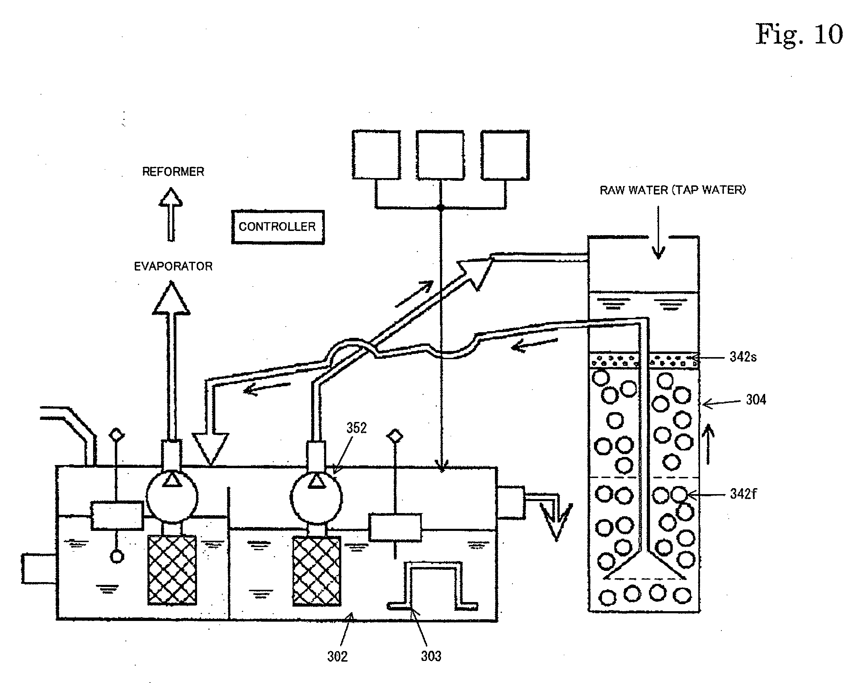

[Fig. 10] Fig. 10 is a view of a conventional fuel cell system.

### Description of the Embodiments

Hereinafter, embodiments of the present invention will be described with reference to the drawings. Note that the present invention is not limited to the embodiments.

### (Embodiment 1)

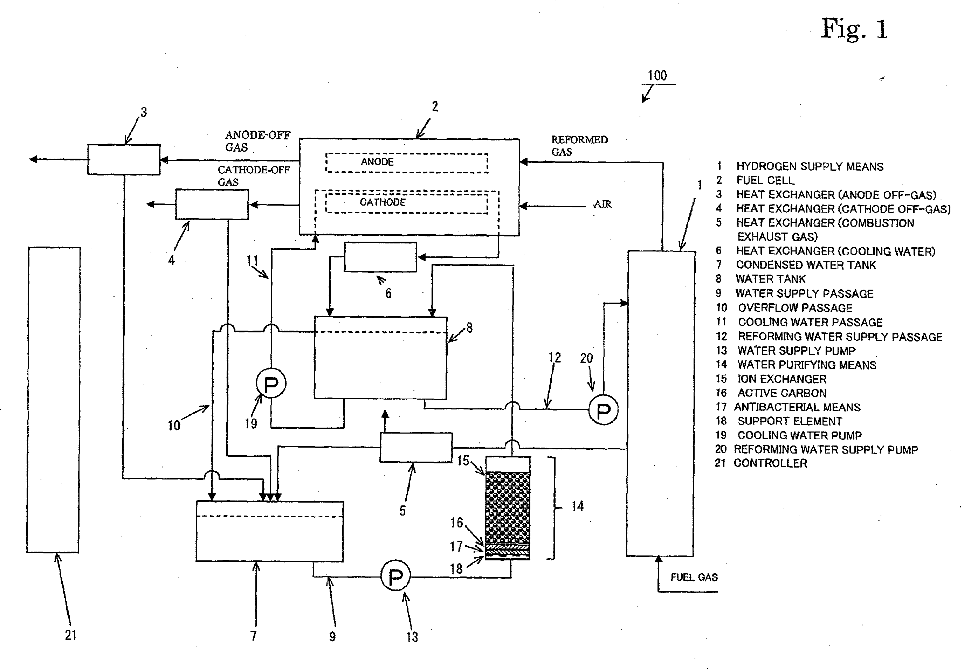

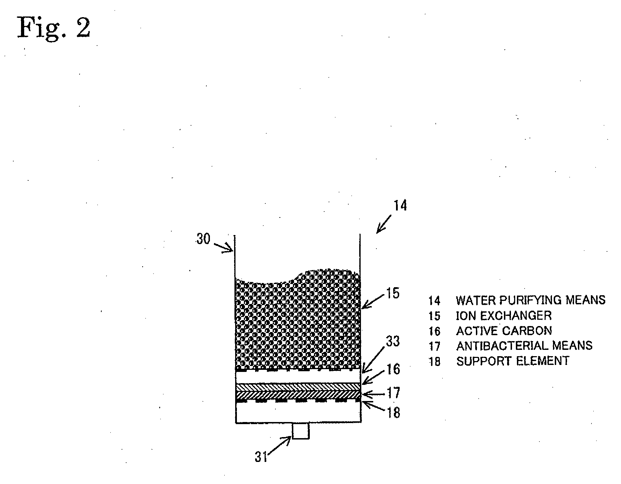

Fig. 1 is a view of a configuration of a fuel cell system according to Embodiment 1 of the present invention. Fig. 2 is an enlarged cross-sectional view of a lower portion of a water purifier in the fuel cell system of Fig. 1. As shown in Fig. 1, a fuel cell system 100 comprises a hydrogen supply means 1, a fuel cell unit (hereinafter simply referred to as "fuel cell") 2, heat exchangers 3 ∼ 6, a condensed water tank 7, a water tank 8, a water supply passage 9, a controller 21, and others.

The hydrogen supply means 1 reforms fuel gas introduced from outside the system 100 into the system 100, to generate hydrogen-rich reformed gas, and supplies the hydrogen-rich reformed gas to an anode 2a of the fuel cell 2. Air humidified to a suitable dew point is supplied from outside to a cathode 2b of the fuel cell 2.

Anode off-gas is exhausted from the anode 2a of the fuel cell 2. The anode off-gas is supplied to the hydrogen supply means 1 as a part of combustion gas of the hydrogen supply means 1 after condensed water is separated from the anode-off gas in the heat exchanger 3. The separated condensed water is recovered by the condensed water tank 7. Cathode off-gas is exhausted from the cathode 2b of the fuel cell 2. The cathode off-gas is exhausted to outside the system 100 after condensed water is separated from the cathode off-gas in the heat exchanger 4. The separated condensed water is recovered by the condensed water tank 7. Combustion exhaust gas exhausted from the hydrogen supply means 1 is released to outside the system 100 after condensed water is separated from the combustion exhaust gas in the heat exchanger 5. The separated condensed water is recovered by the condensed water tank 7.

The condensed water tank 7 and the water tank 8 are coupled to each other via a water supply passage 9 provided with a water supply pump 13 and a water purifier 14. Therefore, the condensed water recovered by the condensed water tank 7 is allowed to pass through the water purifier 14 (see Fig. 2) including an ion exchanger (ion-exchange resin layer) 15, active carbon (active carbon layer) 16, an antibacterial means (antibacterial agent layer) 17, a support element 18, etc.. After that, the condensed water is sent to the water tank 8 and stored therein. The water which has overflowed the water tank 8 is returned to the condensed water tank 7 via an overflow passage 10.

Now, a configuration of the water purifier 14 will be described in detail. The water purifier 14 according to the present embodiment includes a casing 30 having, for example, a rectangular parallelepiped shape and a having a predetermined volume. The casing 30 has, at a bottom portion thereof, an inlet 31 into which the condensed water from the condensed water tank 7 flows. The casing 30 has, at an upper portion thereof, an outlet (see Fig. 1) from which the water flows out to the water tank 8. Therefore, the water is sent from the condensed water tank 7 to the water purifier 14 via the water supply passage 9, flows into the casing 30 through the inlet 31 at the bottom portion, and is sent out to the water tank 8 through the outlet at the upper portion. That is, the water flows from the lower side to the upper side inside the casing 30.

Inside the casing 30, the antibacterial means 17, the active carbon 16, and the ion exchanger 15 are arranged in this order from upstream side in a flow direction of the water. In other words, the antibacterial means 17, the active carbon 16, and the ion exchanger 15 are arranged in this order from the lower side to the upper side in a gravity direction. The support element 18 is provided to support the antibacterial means 17 from below, and there is a specified space between the support element 18 and the inlet 31 of the casing 30. A first gap 33 is provided between the active carbon 16 and the ion exchanger 15 located above the active carbon 16 to separate them from each other.

In the present embodiment, ion-exchange resin is used as the ion exchanger 15, while layered fibrous active carbon is used as the active carbon 16. The antibacterial means 17 is configured such that particles of organic antibacterial agent covered by water-insoluble binder are filled in a layer form into a storage unit (container) made of a polyester mesh and is disposed in contact with the lower surface of the active carbon 16 as shown in Fig. 2. An optimal opening diameter of the polyester mesh is selected to allow the active carbon 16 and the antibacterial means 17 to be directly in contact with each other through a number of openings of the polyester mesh. As the support element 18, lattice-shaped resin is used.

Preferably, the antibacterial means 17 has a layered structure which allows the antibacterial agent to be eluted efficiently into the water. For example, the antibacterial means 17 may have a layered structure formed by using an antibacterial agent including a carried or kneaded antibacterial material, and a container having a plurality of through-holes and storing the antibacterial agent, or may have a layered structure of an antibacterial support element including a carried or kneaded antibacterial material.

The water tank 8 is coupled to a fuel cell 2 via a cooling water passage 11 provided with a cooling water pump 19. By actuating the cooling water pump 19, the water is supplied from the water tank 8 to the fuel cell 2 through the cooling water passage 11 to recover heat generated in the fuel cell 2 during power generation. The heat exchanger 6 causes the heat recovered into the cooling water to be accumulated into the water reserved in a tank (not shown) provided outside.

The water tank 8 is also coupled to the hydrogen supply means 1 via a reforming water supply passage 12 provided with a reforming water supply pump 20. By actuating the reforming water supply pump 20, the water is supplied as reforming water from the water tank 8 to the hydrogen supply means 1 through the reforming water supply passage 12. The controller 21 controls the operation (especially, operation for supplying electric power and heat) of the overall fuel cell system 100.

Hereinafter, a description will be given of a behavior of the condensed water in the fuel cell system 100 configured as described above.

During a state where the fuel cell system 100 is generating electric power, the water is supplied from the water tank 8 to the water supply means 1 and consumed therein. In addition, the water is circulated as cooling water for cooling the fuel cell 2. The condensed water recovered from the passages in the system are gathered into the condensed water tank 7. At a time point when a water level inside the water tank 8 is lowered by a certain amount, the water is supplied from the condensed water tank 7 through the water supply passage 9, by actuating the water supply pump 13. The water is supplied to the water tank 8 after it is purified by the water purifier 14. In this way, during the power generation state, the water is moving on a regular basis inside the water purifier 14. Because of this, microorganisms such as bacteria are less likely to grow proliferously in a specified region of the water purifier 14, which would otherwise clog the water passage.

The water sent to the water tank 8 through the water purifier 14 contains the antibacterial agent (antibacterial ions or organic antibacterial agent) after the water has passed through the antibacterial means 17 inside the water purifier 14. Since the antibacterial agent is carried to the active carbon 16 along with the water flow, it is possible to more surely suppress the bacteria and the like from being generated and growing proliferously, in the active carbon 16. In a case where the antibacterial agent is the antibacterial ions, the antibacterial ions flows out from the active carbon 16 to downstream side, reach the ion exchanger 15, and are absorbed into the ion exchanger 15. Because of this, a concentration of the antibacterial ions in the water sent from the water purifier 14 to the water tank 8 can be lowered.

As described above, during the power generation in the fuel cell system 100 of the present embodiment, the ions can be removed by the ion exchanger 15, and the organic matters can be removed by the active carbon 16. In addition, the bacteria and others can be removed properly by the antibacterial agent, and the antibacterial ions can be suppressed from flowing outwardly from the water purifier 14.

When the power generation in the fuel cell system 100 is stopped, the water stops moving, and therefore stays still inside the water purifier 14. Since the active carbon 16 have adsorbed the organic matters in the condensed water flowing during the operation of the system 100, the microorganisms may be easily generated and may easily grow proliferously in the active carbon 16. However, the antibacterial means 17 disposed in contact with the active carbon 16 effectively suppress the microorganisms from being generated and growing proliferously. This prevents the active carbon 16 from getting clogged with the microorganisms. At a time point when the operation of the system 100 is resumed next, the power generation operation can continue smoothly without preventing the flow of the condensed water.

The first gap 33 is formed above the active carbon 16, and the water can stay in the first gap 33. This water contains the antibacterial agent eluted from the antibacterial means 17. During the stop state of the power generation, the antibacterial agent is supplied to the active carbon 16. Therefore, over a long period of time, the bacteria and the others can be suppressed from being generated and growing proliferously in the active carbon 16. When the water containing the antibacterial agent stays up to a level corresponding to the first gap 33, the entire active carbon 16 is immersed in this water. Therefore, the antibacterial agent can be supplied sufficiently to the entire active carbon 16. By the first gap 33, the active carbon 16 is separated from the ion exchanger 15. Therefore, in a case where the antibacterial agent is the antibacterial ions, it is possible to prevent the antibacterial ions in the vicinity of the upper surface of the active carbon 16 from being absorbed immediately into the ion exchanger 15, and to properly suppress the bacteria and the others from being generated and growing proliferously in the vicinity of the upper surface of the active carbon 16.

Although in the present embodiment, the hydrogen supply means 1 (to be specific, reformer) for reforming the fuel gas introduced from outside the system 100 into the system 100 to generate the hydrogen-rich reformed gas is used, the present invention is not limited to this. For example, as the hydrogen supply means, hydrogen gas may be directly supplied from outside the system 100. In this case, it is not necessary to supply the water from the water tank 8 to the hydrogen supply means as the reformer. Therefore, the reforming water supply passage 12, the reforming water supply pump 20, and others are not required, which can simplify the system significantly.

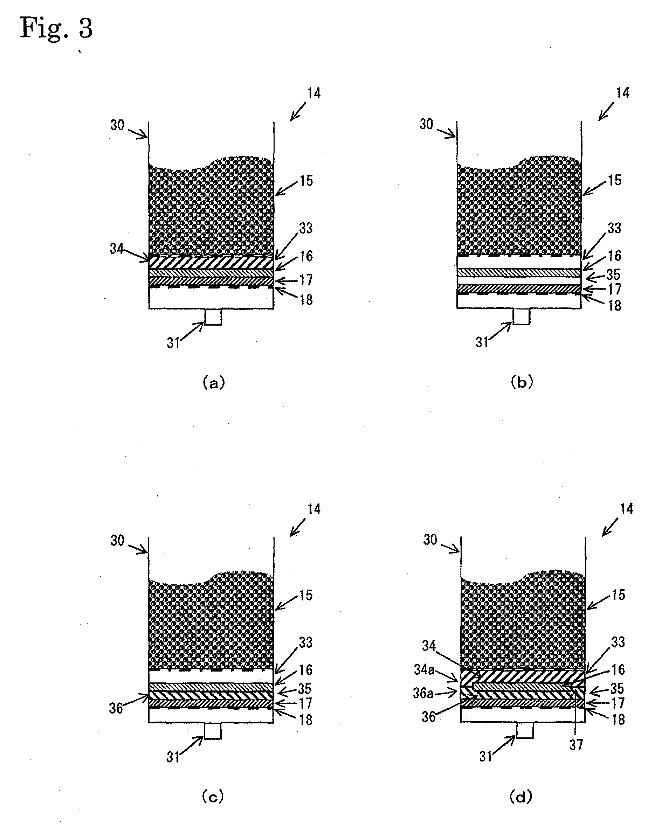

Next, modified examples of the fuel cell system 1 according to Embodiment 1 will be described. Fig. 3 is an enlarged cross-sectional view showing configurations of the lower portions of water purifying means according to Modified examples 1∼4.

### (Modified example 1)

A water purifying means 14a shown in Fig. 3(a) has the same configuration as that of the water purifying means 14 shown in Fig. 2, in a larger part, and is different from the same in that the water purifying means 14a includes a first spacer 34 in the first gap 33. The first spacer 34 is flat and is made of a material which is incapable of ion exchange. The first spacer 34 allows the water to pass therethrough. As a material of the first spacer 34, for example, a resin member having a plurality of of through-holes, a porous resin member, a woven fabric, or an unwoven fabric may be used.

In such a configuration, the first gap 33 can be ensured as a space having a predetermined volume. In Fig. 3(a), the components designated by the same reference numerals as those in Fig. 2 are identical to those in the water purifying means 14 in Fig. 2, and will not be discussed (the same applies to the examples in Figs. 3(b) ∼ 3(d)).

### (Modified example 2)

A water purifying means 14b of Fig. 3(b) has the same configuration as that of the water purifying means 14 of Fig. 2 in a larger part, but is different from the same in that the water purifying means 14b includes a second gap 35 between the active carbon 16 and the antibacterial means 17, in addition to the first gap 33. In such a configuration, since a large quantity of water containing the antibacterial ions can also stay in the second gap 35, the antibacterial agent can be diffused to a region in the vicinity of the active carbon 16.

### (Modified example 3)

A water purifying means 14c of Fig. 3(c) has the same configuration as that of the water purifying means 14b of Modified example 2 in a larger part, but is different from the same in that the water purifying means 14c includes a second spacer 36 provided in the second gap 35. The second spacer 36 is flat and is made of a material which is incapable of ion exchange. The second spacer 36 allows the water to pass therethrough. As a material of the second spacer 36, a resin member having a plurality of through-holes, a porous resin member, a woven fabric, or an unwoven fabric may be used. In such a configuration, the second gap 35 can be surely ensured as a gap having a predetermined volume.

### (Modified example 4)

A water purifying means 14d of Fig. 3(d) includes the first gap 33, the second gap 35, and the first spacer 34 provided in the first gap 33, and the second spacer 36 provided in the second gap 35. At least a portion of a peripheral surface (outer peripheral surface as viewed from above) of the active carbon 16 is apart inward relative to the inner wall surface of the casing 30 of the water purifier 14d. Fig. 3(d) shows a typical example of the active carbon 16, in which a third gap 37 having a specified dimension is provided between the entire peripheral surface of the active carbon 16 and the inner wall surface of the casing 30.

In the water purifier 14d of Modified example 4, a peripheral portion 34a of the first spacer 34 is extended into the third gap 37 from above, and a peripheral portion 36a of the second spacer 36 is extended into the third gap 37 from below. The peripheral portions 34a and 36a are in contact with each other in the third gap 37.

In such a configuration, when viewed from a thickness direction of the active carbon 16 (flow direction of water), the end surface of the peripheral portion of the active carbon 16 is covered with the peripheral portion 34a of the first spacer 34 and the peripheral portion 36a of the second spacer 36. This makes it possible to supply water containing the antibacterial agent up to the end surface of the peripheral portion of the active carbon 16. As a result, generation of the bacteria and the others can be suppressed more surely in the active carbon 16.

Alternatively, only the peripheral portion 34a of the first spacer 34 may be extended to the lower end of the third gap 37 or to a region below the lower end of the third gap 37, or only the peripheral portion 36a of the second spacer 36 may be extended up to the upper end of the third gap 37 or to a region above the upper end of the third gap 37.

### (Modified example 5)

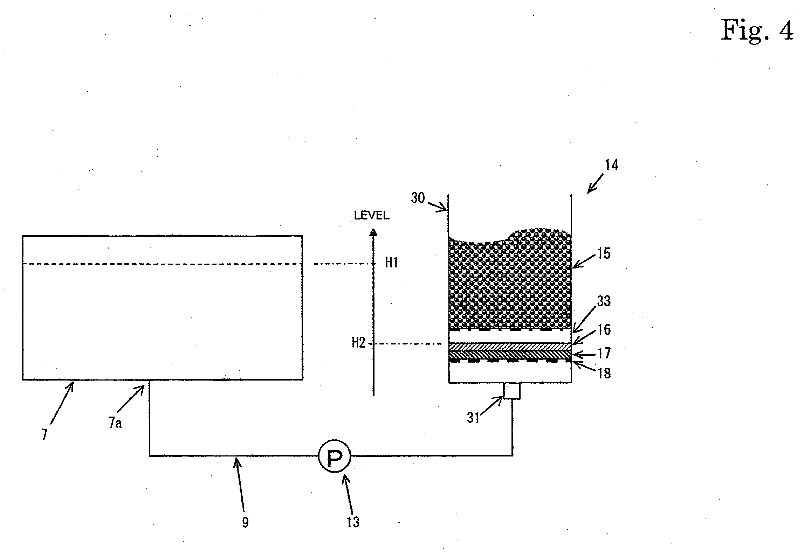

Fig. 4 is a schematic view showing a configuration of the condensed water tank 7 and the water purifier 14 in the fuel cell system 100 according to Modified example 5. As shown in Fig. 4, in the fuel cell system 100, the condensed water tank 7 is provided with a water outlet 7a at the bottom portion thereof. The water supply passage 9 extends from the water outlet 7a and is coupled to the inlet 31 provided at the bottom portion of the casing 30 of the water purifier 14. A water level H1 in the condensed water tank 7 is higher than an upper end position H2 of the active carbon 16 inside the water purifier 14 in the gravity direction.

In such a configuration, even in a case where the fuel cell system 100 is shut-down and the water supply pump 13 is unactuated (in an OFF-state), a state where the active carbon 16 (and antibacterial means 17) is immersed in the water can be maintained. Therefore, the antibacterial agent eluted from the antibacterial means 17 can be supplied to the active carbon 16. To adjust the water level at H1 inside the condensed water tank 7, a water level meter is attached to the condensed water tank 7 and tap water or the like for make-up may be suitably supplied from outside to the condensed water tank 7.

Instead of adjusting the water level inside the condensed water tank 7, the water supply pump 13 may be controlled so that the water level inside the water purifier 14 is higher than the upper end position H2 of the active carbon 16. In this case, for example, the water level meter may be attached to the water purifier 14, and the controller 21 may actuate the water supply pump 13 based on a detected value (water level) of the water level meter. For example, a valve which can be on-off controlled by the controller 21 may be provided in the water supply passage 9. After the water level inside the water purifier 14 is adjusted to become higher than the upper end position H2 of the active carbon 16, by actuating the water supply pump 13, the valve may be closed. To allow water level inside the water purifier 14 to become higher than the upper end position H2 of the active carbon 16, by actuating the water supply pump 13, for example, the water supply pump 13 may be actuated to supply a predetermined amount of the water to the water purifier 14.

### (Embodiment 2)

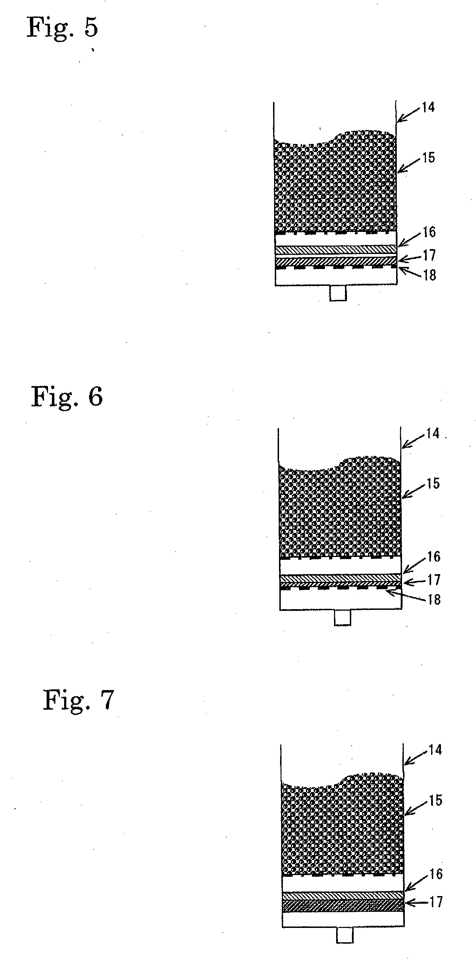

Fig. 5 is an enlarged cross-sectional view of the lower portion of a water purifier 14e incorporated into a fuel cell system according to Embodiment 2 of the present invention.

As shown in Fig. 5, in the water purifier 14e, the antibacterial means 17 is disposed upstream of the active carbon 16, i.e., between the active carbon 16 and the support element 18. The antibacterial means 17 is identical to that of Embodiment 1 except for the use of water-soluble binder. Note that there is a little gap between the active carbon 16 and the antibacterial means 17.

In such a configuration, during the power generation stop state of the fuel cell system, the antibacterial agent eluted from the antibacterial means 17 diffuses and reaches the surface of the active carbon 16. Therefore, the microorganisms can be suppressed from being generated and growing proliferously on the surface of the active carbon 16. When the operation of the fuel cell system is resumed, the condensed water flows in a direction from the antibacterial means 17 to the active carbon 16 inside water purifying means 14e. Therefore, organic antibacterial agent eluted from the antibacterial means 17 is captured by the active carbon 16, and will not flow outwardly to downstream side of the water purifying means 14. As a result, the operation can continue, without causing a problem which occurs in the conventional system, in the hydrogen supply means 1 which is positioned downstream of the water purifier 14e and uses the water from the water purifier 14e.

Although in the water purifier 14e of the present embodiment, there is a little gap between the active carbon 16 and the antibacterial means 17, the same advantages are achieved by causing the active carbon 16 and the antibacterial means 17 to contact each other like the water purifier 14 of Fig. 2.

### (Embodiment 3)

Fig. 6 is an enlarged cross-sectional view of the lower portion of a water purifier 14f incorporated into a fuel cell system according to Embodiment 3 of the present invention.

As shown in Fig. 6, in the water purifier 14f, the antibacterial means 17 includes organic antibacterial agent carried by water-insoluble binder on the surface of polyester meshes, and is positioned upstream of the active carbon 16 in contact with the lower surface of the active carbon 16.

In such a configuration, since the surface area of an antibacterial agent carrier can be increased, antibacterial agent with a small amount can work effectively. Because of this, the usage amount of the antibacterial agent can be reduced, and hence, a cost can be reduced. In addition, since the volume of the antibacterial means 17 can be reduced, the water purifying means 14 and the overall system can be reduced in size. As a result, overall cost can be reduced, and its commercial value can be improved.

Although in the present embodiment, the polyester meshes are used as the carrier of the antibacterial agent, the advantages as described above can be achieved even in a case where various members, such as a woven fabric, a cloth, an unwoven fabric, a thin plate, a punched plate, a porous plate, etc., which are made of heat-resistant materials such as another kind of resin, or ceramic, are used as carriers.

Although a method of carrying the antibacterial agent on the surface of the carrier is used to allow the carrier to have an antibacterial ability, the same advantages can be achieved if the antibacterial agent is kneaded into the carrier. In this method, the usage amount of the antibacterial agent may be increased depending on the situation. However, this method can advantageously achieve endurance of the carrier because the antibacterial agent does not easily come off from the carrier.

Although a combination of the water-insoluble binder and the organic antibacterial agent is described as a type of the binder and the antibacterial agent, the present invention is not limited to this combination. For example, the advantages as described above can be achieved by using a water-soluble binder and metal ion antibacterial agent according to characteristics of combinations described in Embodiment 1 to Embodiment 3.

### (Embodiment 4)

Fig. 7 is an enlarged cross-sectional view of the lower portion of a water purifier 14g incorporated into a fuel cell system according to Embodiment 4 of the present invention.

As shown in Fig. 7, in the water purifier 14g, the antibacterial means 17 has a structure in which the metal ion antibacterial agent is kneaded into the lattice-shaped resin-made support element of Embodiment 1, and is positioned upstream of the active carbon 16 so as to contact the lower surface of the active carbon 16.

In such a configuration, since the antibacterial means 17 serves as the support element of the active carbon 16, the number of components can be reduced and thereby a cost can be reduced.

### (Embodiment 5)

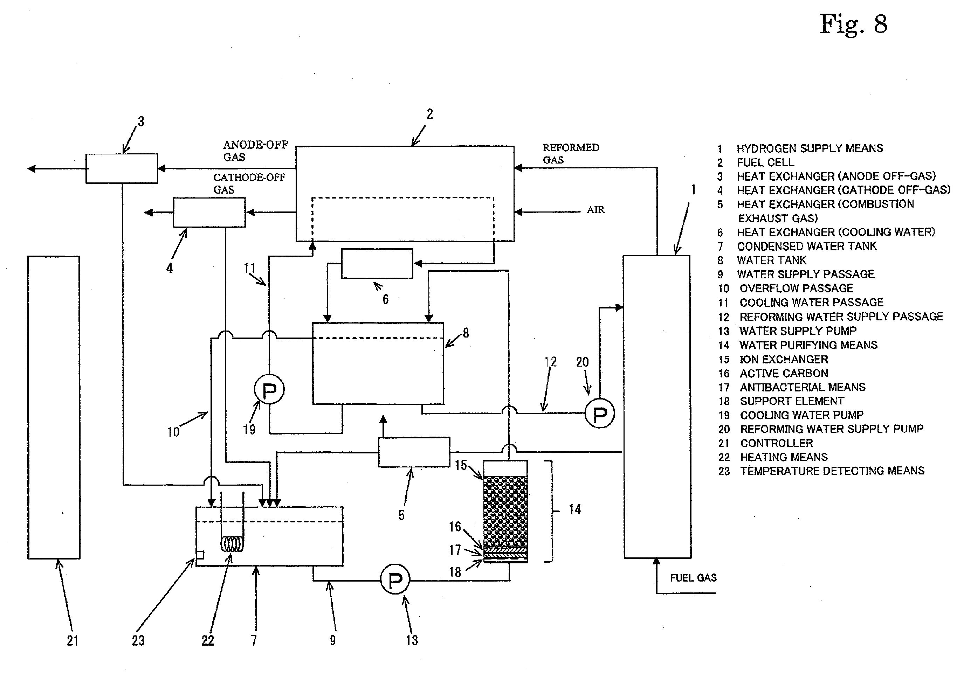

Fig. 8 is a view of a configuration of a fuel cell system 101 according to Embodiment 5 of the present invention.

The fuel cell system 101 of Fig. 8 has a configuration which is basically the same as that of the fuel cell system 100 of Embodiment 1. Therefore, the same components will not be described, but only a difference from Embodiment 1 will be described.

In the fuel cell system 101, the condensed water tank 7 is attached with a heating means 22 constituted by an electric heater and a temperature detecting means 23. The heating means 22 and the temperature detecting means 23 are coupled to the controller 21 (connection configuration is not shown). The condensed water inside the condensed water tank can be heated such that the water is maintained at a desired temperature for a desired time.

Hereinafter, a description will be given of the operation and action of the fuel cell system 101 configured as described above.

During the power generation in the fuel cell 2, in the fuel cell system 101, the heating means 22 heats the condensed water inside the condensed water tank 7 on a regular basis. As a heating condition, heating is carried out so that the water temperature is maintained for example, at 60 degrees C for one hour once per day. With such an operation, the microorganisms can be suppressed from growing proliferously inside the condensed water tank 7, and hence the amount of microorganisms which would adhere onto the active carbon 16 inside the water purifying means 14 at a downstream side can be lessened.

In the present embodiment, since the antibacterial means 17 can suppress the microorganisms from growing proliferously in the active carbon 16 during the power generation stop state, the heating means 22 has only to perform heating only during the power generation in the fuel cell system 101, and it is not necessary to use extra electric power from utilities, which results in a high efficiency.

During the power generation of the fuel cell system, when the microorganisms grow proliferously most easily, they are suppressed from growing proliferously, by actuation of the heating means 22. Because of this, the amount of the antibacterial agent for use as the antibacterial means 17 positioned in the vicinity of the active carbon 16 is lessened to an amount required to suppress the microorganisms from growing proliferously, during a shut-down state of the fuel cell system 101. Therefore, a longer life and cost reduction of the antibacterial means 17 can be achieved.

Although the electric heater is used as a specific method of the heating means 22 in the present embodiment, the present invention is not limited to this method, but other method may be used so long as the condensed water can be maintained at a predetermined temperature for a predetermined period of time. For example, the temperature of the water in the water tank 8, which is used as the cooling water for cooling the fuel cell 2, is typically kept at 70 ∼ 80 degrees C during the power generation. Therefore, by supplying the water from the water tank 8 to the condensed water tank 7 via the overflow passage 10, the water temperature in the condensed water tank 7 can be raised up to a predetermined temperature. In this method, it is possible to suppress the microorganisms from growing proliferously in the condensed water, during the power generation, without incorporating a component such as an electric heater into the system, or consuming extra electric power.

### Industrial Applicability

As described above, a fuel cell system of the present invention is capable of suppressing microorganisms from being generated and growing proliferously in active carbon even during an operation stop state. Even in a case where antibacterial agent is eluted and stays in a water purifying means, the antibacterial agent does not flow outwardly from the water purifying means when the operation of the fuel cell system is resumed. Therefore, it is possible to prevent the antibacterial agent from negatively affecting a hydrogen supply means or a fuel cell at a downstream side. Therefore, the present invention is applicable to a fuel cell cogeneration system, etc., which is operative without a maintenance work for a long period of time.

### Reference Signs Lists

- 1: hydrogen supply means
- 2: fuel cell
- 7: condensed water tank
- 8: water tank
- 9: water supply passage
- 14: water purifying means
- 15: ion exchanger
- 16: active carbon
- 17: antibacterial means
- 18: support element
- 33: first gap
- 34: first spacer
- 35: second gap
- 36: second spacer
- 37: third gap

## Claims

1. A fuel cell system comprising:
a fuel cell unit (2) for generating electric power using fuel gas and oxidizing gas and supplying the electric power;
a condensed water tank (7) for storing condensed water recovered from gas exhausted from the fuel cell unit (2);
a water supply passage (9) through which water is supplied from the condensed water tank to the fuel cell unit (2); and
a water purifier (14) disposed in the water supply passage (9) to purify at least ions in the water;
the water purifier (14) including an ion-exchange resin layer (15), an antibacterial agent layer (17) disposed upstream of the ion-exchange resin layer (15) in a flow direction, and an active carbon layer (16),
**characterized in that** the active carbon layer (16) is disposed between the ion-exchange resin layer (15) and the antibacterial agent layer (17), and a first gap (33) formed between the active carbon layer (16) and the ion-exchange resin layer (15),
wherein the water purifier (14) is configured such that a water level inside the water purifier (14) is higher than the active carbon layer (16) in a gravity direction to immerse the antibacterial agent layer (17) and the active carbon layer (16) in the water during the stop state of power generation in the fuel cell system; and
wherein a water level inside the condensed water tank (9) is higher than the active carbon layer (16) in the gravity direction.

2. The fuel cell system according to Claim 1, wherein a first spacer (34) having water permeability is disposed in the first gap (33).

3. The fuel cell system according to Claim 1 or 2, wherein the water purifier (14) has a second gap (35) between the antibacterial agent layer (17) and the active carbon layer (16).

4. The fuel cell system according to Claim 3, wherein a second spacer (36) having water permeability is disposed in the second gap (35).

5. The fuel cell system according to Claim 1,
wherein the water purifier (14) is coupled to the water supply passage (9) such that the water purifier (14) is supplied with the water from an underside portion in the gravity direction through the water supply passage (9); and
the antibacterial agent layer (17) and the active carbon layer (16) are disposed below the ion-exchange resin layer (15) in the gravity direction.

6. The fuel cell system according to Claim 5,
wherein the condensed water tank (9) is coupled to the water supply passage (9) to discharge the water from an underside portion in the gravity direction through the water supply passage (9).

7. The fuel cell system according to any one of Claims 1 to 6, wherein the antibacterial agent layer (17) includes an antibacterial agent including a carried or kneaded antibacterial material, and a container having a plurality of through-holes and storing the antibacterial agent.

8. The fuel cell system according to any one of Claims 1 to 6, wherein the antibacterial agent layer (17) is an antibacterial support element including a carried or kneaded antibacterial material.

## Patentansprüche

1. Brennstoffzellensystem, das umfasst:,
eine Brennstoffzelleneinheit (2) zum Erzeugen elektrischer Energie unter Verwendung von Brenngas und oxidierendem Gas und zum Zuführen der elektrischen Energie;
einen Kondenswasserbehälter (7) zum Aufbewahren von Kondenswasser, das aus aus der Brennstoffzelleinheit (2) ausgestoßenem Gas zurückgewonnen wird;
einen Wasserzuführkanal (9), über den der Brennstoffzelleneinheit (2) Wasser von dem Kondenswasserbehälter zugeführt wird; und
eine Wasserreinigungseinrichtung (14), die in dem Wasserzuführkanal (9) angeordnet ist, um wenigstens Ionen in dem Wasser zu entfernen;
wobei die Wasserreinigungseinrichtung (14) eine lonenaustausch-Harzschicht (15), eine Schicht (17) aus antibakteriellem Wirkstoff, die der Ionenaustausch-Harzschicht (15) in eine Strömungsrichtung vorgelagert angeordnet ist, und eine Aktivkohleschicht (16) enthält,
**dadurch gekennzeichnet, dass** die Aktivkohleschicht (16) zwischen der Ionenaustausch-Harzschicht (15) und der Schicht (17) aus antibakteriellem Wirkstoff angeordnet ist und ein erster Zwischenraum (33) zwischen der Aktivkohleschicht (16) und der Ionenaustausch-Harzschicht (15) ausgebildet ist,
wobei die Wasserreinigungseinrichtung (15) so eingerichtet ist, dass ein Wasserpegel im Inneren der Wasserreinigungseinrichtung (14) in einer Schwerkraftrichtung höher ist als die Aktivkohleschicht (16), so dass die Schicht (17) aus antibakteriellem Wirkstoff und die Aktivkohleschicht (16) in dem Wasser eingetaucht sind, wenn sich das Brennstoffzellensystem in dem Zustand befindet, in dem Energieerzeugung unterbrochen ist; und
ein Wasserpegel im Inneren des Kondenswasserbehälters (9) in der Schwerkraftrichtung höher ist als die Aktivkohleschicht (16).

2. Brennstoffzellensystem nach Anspruch 1, wobei ein erster Abstandshalter (13), der wasserdurchlässig ist, in dem ersten Zwischenraum (33 angeordnet ist.

3. Brennstoffzellensystem nach Anspruch 1 oder 2, wobei die Wasserreinigungseinrichtung (14) einen zweiten Zwischenraum (35) zwischen der Schicht (17) aus antibakteriellem Wirkstoff und der Aktivkohleschicht (16) aufweist.

4. Brennstoffzellensystem nach Anspruch 3, wobei der zweite Abstandshalter (36), der wasserdurchlässig ist, in dem zweiten Zwischenraum (35) angeordnet ist.

5. Brennstoffzellensystem nach Anspruch 1,
wobei die Wasserreinigungseinrichtung (14) mit dem Wasserzuführkanal (9) so verbunden ist, dass der Wasserreinigungseinrichtung (14) das Wasser von einem Unterseitenabschnitt in der Schwerkraftrichtung über den Wasserzuführkanal (9) zugeführt wird; und
die Schicht (17) aus antibakteriellem Wirkstoff sowie die Aktivkohleschicht (16) in der Schwerkraftrichtung unterhalb der Ionenaustausch-Harzschicht (15) angeordnet sind.

6. Brennstoffzellensystem nach Anspruch 5,
wobei der Kondenswasserbehälters (7) mit dem Wasserzuführkanal (9) verbunden ist, um das Wasser von einem Unterseitenabschnitt in der Schwerkraftrichtung über den Wasserzuführkanal (9) abzuleiten.

7. Brennstoffzellensystem nach einem der Ansprüche 1 bis 6, wobei die Schicht (17) aus antibakteriellem Wirkstoff einen antibakteriellen Wirkstoff, der ein in einem Träger befindliches oder geknetetes antibakterielles Material enthält, sowie einen Behälter mit einer Vielzahl von Durchgangslöchern enthält, in dem der antibakterielle Wirkstoff aufbewahrt wird.

8. Brennstoffzellensystem nach einem der Ansprüche 1 bis 6, wobei die Schicht (17) aus antibakteriellem Wirkstoff ein antibakterielles Trägerelement ist, das ein in einem Träger befindliches oder geknetetes antibakterielles Material enthält.

## Revendications

1. Système de pile à combustible comprenant :
- une unité de pile à combustible (2) pour générer de l'électricité en utilisant un gaz combustible et un gaz oxydant et délivrer l'électricité ;
- un réservoir d'eau condensée (7) pour stocker de l'eau condensée récupérée à partir des gaz ayant réagis dans l'unité de pile à combustible (2) ;
- un passage d'alimentation en eau (9) par lequel l'eau est délivrée du réservoir d'eau condensée à l'unité de pile à combustible (2) ; et
- un purificateur d'eau (14) disposé dans le passage d'alimentation en eau (9) pour purifier au moins les ions dans l'eau ;
- le purificateur d'eau (14) comprenant une couche de résine d'échange d'ions (15), une couche d'agent antibactérien (17) disposée en amont de la couche de résine d'échange d'ions (15) dans la direction d'écoulement et une couche de charbon actif (16),
- **caractérisé en ce que** la couche de charbon actif (16) est disposée entre la couche de résine d'échange d'ions (15) et la couche d'agent antibactérien (17) et un premier espace (33) formé entre la couche de charbon actif (16) et la couche de résine d'échange d'ions (15),
- dans lequel le purificateur d'eau (14) est configuré de sorte qu'un niveau d'eau à l'intérieur du purificateur d'eau (14) soit plus élevé que la couche de charbon actif (16) dans la direction de la gravité pour immerger la couche d'agent antibactérien (17) et la couche de charbon actif (16) dans l'eau au cours de l'état d'arrêt de la génération d'électricité dans le système de pile à combustible ; et
- dans lequel un niveau d'eau à l'intérieur du réservoir d'eau condensée (9) est plus élevé que la couche de charbon actif (16) dans la direction de la gravité.

2. Système de pile à combustible selon la revendication 1, dans lequel un premier dispositif d'espacement (34) ayant une perméabilité à l'eau est disposé dans le premier espace (33).

3. Système de pile à combustible selon les revendications 1 ou 2, dans lequel le purificateur d'eau (14) comporte un second espace (35) entre la couche d'agent antibactérien (17) et la couche de charbon actif (16).

4. Système de pile à combustible selon la revendication 3, dans lequel un second dispositif d'espacement (36) ayant une perméabilité à l'eau est disposé dans le second espace (35).

5. Système de pile à combustible selon la revendication 1 :
- dans lequel le purificateur d'eau (14) est couplé au passage d'alimentation en eau (9) de sorte que le purificateur d'eau (14) soit alimenté avec l'eau d'une partie sous-jacente dans la direction de la gravité par le passage d'alimentation en eau (9) ; et
- la couche d'agent antibactérien (17) et la couche de charbon actif (16) sont disposées au-dessous de la couche de résine d'échange d'ions (15) dans la direction de la gravité.

6. Système de pile à combustible selon la revendication 5 :
- dans lequel le réservoir d'eau condensée (7) est couplé au passage d'alimentation en eau (9) pour décharger l'eau d'une partie sous-jacente dans la direction de la gravité par le passage d'alimentation en eau (9).

7. Système de pile à combustible selon l'une quelconque des revendications 1 à 6, dans lequel la couche d'agent antibactérien (17) comprend un agent antibactérien comprenant un matériau antibactérien porté ou malaxé et un conteneur comportant une pluralité de trous traversant et stockant l'agent antibactérien.

8. Système de pile à combustible selon l'une quelconque des revendications 1 à 6, dans lequel la couche d'agent antibactérien (17) est un élément de support antibactérien comprenant un matériau antibactérien porté ou malaxé.
